(19) Europäisches Patentamt

European Patent Office

Office européen des brevets

(11)  **EP 1 450 228 B1**

(12)  **EUROPÄISCHE PATENTSCHRIFT**

(45) Veröffentlichungstag und Bekanntmachung des Hinweises auf die Patenterteilung:
**02.08.2006 Patentblatt 2006/31**

(51) Int Cl.:
*G05D 1/02* *(2006.01)*

(21) Anmeldenummer: **04004069.3**

(22) Anmeldetag: **23.02.2004**

(54) **Vorrichtung und Verfahren zum Steuern eines Fahrzeuges**

Apparatus and method for controlling a vehicle

Dispositif et procédé de commande d'un véhicule

(84) Benannte Vertragsstaaten:
**AT BE BG CH CY CZ DE DK EE ES FI FR GB GR HU IE IT LI LU MC NL PT RO SE SI SK TR**

(30) Priorität: **24.02.2003 DE 10307794**

(43) Veröffentlichungstag der Anmeldung:
**25.08.2004 Patentblatt 2004/35**

(73) Patentinhaber: **Hans Einhell AG**
**94405 Landau/Isar (DE)**

(72) Erfinder: **Thannhuber, Markus**
**94405 Landau/Isar (DE)**

(74) Vertreter: **Fleuchaus, Michael A.**
**Fleuchaus & Gallo**
**Melchiorstrasse 42**
**81479 München (DE)**

(56) Entgegenhaltungen:
**WO-A-99/59042          DE-A- 10 027 531**
**US-A- 5 974 347**

**Beschreibung**

Die vorliegende Efindung bezieht sich auf ein Fahrzeug zur Bodenbearbeitung, insbesondere ein autonomes Fahrzeug zur Bodenbearbeitung mit einer Vorrichtung zum Steuern des Fahrzeuges. Die Erfindung wird unter Bezugnahme auf einen Rasenmäher beschrieben, es wird jedoch klargestellt, dass darüber hinaus auch weitere Anwendungsmöglichkeiten denkbar sind.

Der Begriff Bodenbearbeitung wird im folgenden verstanden als Bearbeitung des Bodens selbst, sowie auf dem Boden vorhandener Pflanzen, wie zum Beispiel Gras. Der Begriff Bodenbearbeitung umfaßt daher neben dem Grasschneiden auch Bearbeitungen, wie etwas das Ziehen von Furchen in einen Acker, oder das Aufstreuen von Farbe bzw. Farbpulver, um beispielsweise Ränder eines Spielfeldes zu markieren. Auch das Streuen von Düngemitteln oder Samen wird als Bodenbearbeitung im Sinne der Erfindung verstanden.

Rasenmäher sind im Stand der Technik seit langem bekannt. So ist beispielsweise ein automatisierter Rasenmäher aus der US 5,974,347 bekannt, bei welcher die Position und die Bearbeitungsfläche durch eine Vielzahl von Funksendern bestimmt wird.

Ferner ist auch ein automatisierter Roboter aus der WO 99/59042 bekannt, bei welchem die Navigation mittels feststehender Marker erfolgt, die von einem Sensor des Roboter erfasst werden. Schließlich ist auch eine festgesteuerte und programmierbare Bodenbearbeitungsmaschine aus der DE 100 27 531 A1 bekannt, die eine Funksteuerung aufweist und die Position der Maschine mittels im Arbeitsgebiet installierter Sender bestimmt.

Da das Rasenmähen, insbesondere in größeren Gartenanlagen eine sehr zeitintensive Betätigung darstellt, besteht der Wunsch, einen Rasenmäher zu schaffen, der nicht permanent von einem Benutzer bedient werden muß, sondern autonom arbeitet. In diesem Zusammenhang besteht das Problem, dass der Rasenmäher möglichst genau die vorgesehenen Flächen bearbeitet. Besondere Schwierigkeiten bereitet es dabei, wenn Hindernisse, wie zum Beispiel Bäume oder Sträucher, auf der zu bearbeitenden Rasenfläche vorhanden sind, welche von dem Rasenmäher umfahren werden müssen oder wenn das Grundstück nicht durch gerade Linien begrenzt wird.

Der Erfindung liegt daher die Aufgabe zugrunde, einen Rasenmäher zu schaffen, der autonom arbeitet und in der Lage ist, beliebige Grundstücksflächen, gegebenenfalls mit Hindernissen innerhalb der Fläche, wie zum Beispiel Bäumen oder Sträuchern, zu befahren und den Rasen des Grundstücks zu bearbeiten.

Diese Aufgabe wird durch den Gegenstand des Anspruches 1 gelöst. Bevorzugte Ausführungsformen sind Gegenstand der Unteransprüche.

Gegenstand der Erfindung ist ein Fahrzeug zur Bodenbearbeitung, insbesondere ein autonomes Fahrzeug zur Bodenbearbeitung, insbesondere ein Rasenmäher mit einer Vorrichtung zum Steuern des Fahrzeuges. Die Vorrichtung zum Steuern des Fahrzeuges weist wenigstens eine Sendeeinrichtung auf, welche wenigstens ein physikalisch erfaßbares Signal in wenigstens eine frei wählbare Richtung, bezogen auf das Fahrzeug, aussendet. Bei dem physikalisch erfaßbaren Signal kann es sich sowohl um ein optisches, als auch um ein akustisches oder beliebiges elektromagnetisches Signal handeln.

Weiterhin weist die Vorrichtung zum Steuern des Fahrzeuges eine Vielzahl vom Fahrzeug getrennt angeordneten Reflexionseinrichtungen auf, welche das von der Sendeeinrichtung ausgesendete Signal empfangen und in wenigstens einer, bevorzugt einer Vielzahl, von vorgegebenen Richtungen reflektieren und/oder aussenden.

Die Vorrichtung weist ferner wenigstens eine Empfangseinrichtung auf, welche dazu geeignet ist, die Signale, die von der Sendeeinrichtung ausgesandt und von der Reflektionseinrichtung reflektiert und/oder ausgesandt werden, zu empfangen.

Ferner weist die Vorrichtung wenigstens eine im Fahrzeug angeordnete Mikroprozessoreinrichtung auf, welche durch ein Programm gesteuert ist, das in einem mit der Sende- und Empfangseinrichtung verbundenen Speicher abgespeichert ist, wobei diese Mikroprozessor-Einrichtung unter Verwendung von wenigstens zwei, bevorzugt drei bis fünf und besonders bevorzugt eine Vielzahl, aus unterschiedlichen Richtungen empfangenen Signalen die Position des Fahrzeugs ermittelt. Schließlich weist die Vorrichtung eine Steuereinrichtung für wenigstens die Empfangseinrichtung, bevorzugt die Empfangs- und die Sendeeinrichtung auf, welche bewirkt, dass die Signalrichtung verändert wird.

In einer bevorzugten Ausführungsform sendet die Sendeeinrichtung das Signal in vorgegebenen Intervallen aus, wobei besonders bevorzugt diese Intervalle Frequenzen zwischen 0,1 und 1000 Hz, bevorzugt zwischen 1 und 100 Hz, besonders bevorzugt zwischen 5 und 50 Hz und insbesondere ca. 10 Hz aufweisen.

Bevorzugt handelt es sich bei dem optisch erfaßbaren Signal um Licht wenigstens einer vorgegebenen Wellenlänge, wobei besonders bevorzugt die Wellenlänge des optisch erfaßbaren Signals zwischen dem ultravioletten Bereich und dem FernInfrarotbereich des Wellenlängenspektrums, bevorzugt im Infrarotbereich des Wellenlängenspektrums liegt.

In einer besonders bevorzugten Ausführungsform beeinflußt die Reflektionseinrichtung neben der Richtung des optisch erfassbaren, von den Sendeeinrichtung ausgesendeten Signals wenigstens noch eine weitere physikalische Eigenschaft des optisch erfaßbaren Signals. Bei dieser weiteren physikalischen Eigenschaft kann es sich beispielsweise um eine Wellenlänge des Signals, den Polarisationszustand des Signals, die Polarisationsrichtung, die Phase, die Streuung, das Reflektionsverhalten oder dergleichen handeln.

Besonders bevorzugt weist die Empfangseinrichtung und/oder die Reflektionseinrichtung Elemente auf, welche wenigstens eine physikalische Eigenschaft des von der Reflektionseinrichtung reflektierten Signals ändern bzw. detektieren. Bevorzugt werden dabei Elemente zur Änderung wenigstens einer der physikalischen Eigenschaften verwendet, wie zum Beispiel Reflektionsgitter, Polarisationsgitter, Polarisationsfilter, elektrooptische Materialien, oder dergleichen.

Ferner weist die Empfangseinrichtung gemäß einer besonders bevorzugten Ausführungsform Elemente auf, welche die Reflektions- und/oder Streueigenschaft einer Reflektionseinrichtung bestimmt.

In einer weiteren bevorzugten Ausführungsform weist das Fahrzeug zur Bodenbearbeitung sicherheitstechnische Einrichtungen auf, wie zum Beispiel einen Untergreifschutz für insbesondere scharfkantige Schneideinrichtungen, Neigungssensoren, Berührungssensoren, Drehmomentbestimmungen, zum Beispiel für das Bearbeitungsgerät, einen Überspannungsschutz, Überlastungsschutz, Feuchtigkeitssensoren oder dergleichen. Besonders bevorzugt ist noch eine weitere Mikroprozessoreinrichtung vorgesehen, welche nicht am Fahrzeug angeordnet ist und zur Steuerung desselben beiträgt.

Bevorzugt weist das Fahrzeug wenigstens einen Sensor auf, der aus einer Gruppe von Sensoren ausgewählt ist, welche Temperatursensoren, Batterieladungssensoren, Feuchtigkeitssensoren, Neigungssensoren, Windsensoren oder Drehmomentsensoren enthält.

Bevorzugt weist das Fahrzeug eine Vorrichtung zum Schneiden von Gras auf, wobei besonders bevorzugt der Abstand der Einrichtung zum Schneiden von Gras, zu dem zu bearbeitenden Boden variabel ist. Besonders bevorzugt wird der Abstand der Einrichtung zum Schneiden von Gras von dem zu bearbeitenden Boden von der im Fahrzeug angeordneten Mikroprozessoreinrichtung gesteuert.

In einer weiteren bevorzugten Ausführungsform ist eine weitere Sendeeinrichtung, sowie eine weitere Empfangseinrichtung vorgesehen, welche dazu geeignet sind, Unregelmäßigkeiten des zu bearbeitenden Bodens zu erfassen.

Ferner kann durch eine kontinuierliche Erfassung der Lage des Fahrzeugs auch die Topographie des Bearbeitungsraums bzw. der Bearbeitungsfläche bestimmt werden. Hierfür können beispielsweise einfache Lagesensoren wie z. B. Magnetfelddetektoren verwendet werden, die es dem System ermöglichen, eine zu Beginn des Fahrzeugbetriebs als eben angenommene Fläche schrittweise dreidimensional zu modellieren und bei der Steuerung des Fahrzeugs insbesondere zur Bearbeitung des Bodens zu berücksichtigen.

Besonders bevorzugt weist das Fahrzeug mehrere, insbesondere vier Räder auf, wobei in einer weiteren besonders bevorzugten Ausführungsform jeweils zwei der vier Räder miteinander drehfest verbunden sind. Eine derartige drehfeste Verbindung kann beispielsweise durch Ketten oder Bänder zustande kommen.

Bevorzugt erfolgt die Richtungsänderung des Signals mittels einer Reflektionsvorrichtung, wie beispielsweise einem Spiegel, wobei die Reflektionseinrichtung wenigstens um eine Achse drehbar gelagert ist.

So kann beispielsweise die Reflexionseinrichtung ein Kugelspiegel oder ein Planarspiegel sein.

Gemäß einer weiteren besonders bevorzugten Ausführungsform können die Reflexionseinrichtungen auch Objekte sein, die aufgrund ihres optischen Reflexionsverhaltens und/oder Streuverhaltens Eigenschaften aufweisen, welche das Signal in der Art verändern, dass dieses mittels der Empfangseinrichtung detektiert und somit dem Objekt mit einer vorgegebenen Position zugeordnet werden kann. Diese Art von Reflexionseinrichtungen können beispielsweise Regenabflussrohre, Gartenlampen oder sonstige Objekte sein, welche über einen hinreichend großen Raumwinkel die von der Sendeeinrichtung ausgehenden Signale reflektieren und/oder streuen.

Gemäß einer besonders bevorzugten Ausführungsform ist es auch vorgesehen, dass eine Reflexionseinrichtung ein entsprechendes Signal emittiert.

Besonders bevorzugt ist die durch die Reflektionsvorrichtung aufgespannte Ebene in einem vorgegebenen Winkel zu der Ebene angeordnet, welche im Wesentlichen durch die Radachsen des Fahrzeugs aufgespannt wird. Dieser Winkel liegt zwischen 0° und 90°, bevorzugt zwischen 30° und 60° und besonders bevorzugt im Bereich von 45°. Besonders bevorzugt ist dabei die Reflektionsvorrichtung um eine Achse drehbar gelagert, welche im wesentlich senkrecht zu der Ebene ist, die im wesentlichen durch die Radachsen des Fahrzeugs aufgespannt wird.

Bevorzugt ist in der Sendeeinrichtung eine optische Vorrichtung vorgesehen, welche das physikalisch erfaßbare Signal in einem vorgegebenen Winkel streut bzw. beugt, wobei besonders bevorzugt die Streuung bzw. Beugung des physikalisch erfaßbaren Signals im wesentlichen in zwei Ausbreitungsrichtungen erfolgt. Die Streuung bzw. Beugung des physikalisch erfaßbaren Signals erfolgt in einem Winkelbereich zwischen 0° und 180°, bevorzugt zwischen 20° und 160° und besonders bevorzugt zwischen 45° und 135°.

Die Änderung des Signals durch die Reflektionseinrichtung erfolgt bevorzugt im wesentlichen passiv. Unter passiv wird dabei verstanden, dass die Änderung des Signals im wesentlichen durch die Eigenschaft des Signals bestimmt wird und die Reflexionseinrichtung im wesentlichen keine von dem Signal unabhängigen Änderungen desselben vornimmt.

Bevorzugt weist das Fahrzeug eine Vorrichtung zum Senden und Empfangen von Daten auf.

Besonders bevorzugt ist eine weitere, außerhalb des Fahrzeugs angeordnete Mikroprozessoreinrichtung zur Steuerung des Fahrzeuges zur Bodenbearbeitung vorgesehen, welche durch ein Programm gesteuert ist, und welche eine Vorrichtung zur Datenübertragung zwischen dem Fahrzeug und der Mikroprozessoreinrichtung aufweist.

Die Erfindung ist ferner auf ein Verfahren zur Steuerung eines Fahrzeuges zur Bodenbearbeitung gerichtet, welches folgende Verfahrensschritte umfaßt:

In einem ersten Verfahrensschritt werden die Positionen einer Vielzahl von Reflektionseinrichtungen bestimmt. Die örtlich bestimmten Reflexionseinrichtungen stellen die Referenzpunkte für die Bestimmung der Position des Fahrzeugs dar. Gemäß einer besonders bevorzugten Ausführungsform werden diese Einrichtungen durch ihr Reflexionssignal von der Empfangseinrichtung und der damit verbundenen Mikroprozessoreinrichtung bestimmt und werden als ortsfeste Referenzpunkte für die Positionsbestimmung des Fahrzeugs verwendet.

Gemäß einer besonders bevorzugten Ausführungsform können ferner während des Betriebs weitere Reflexionseinrichtungen erkannt und als Referenzpunkte für die Positionsbestimmung des Fahrzeugs mit berücksichtigt werden.

Es liegt ferner im Sinn der vorliegenden Erfindung, dass sich die Zahl der Reflexionseinrichtungen verändern kann, wobei die Reflexionseinrichtungen, welche über einen vorgegebenen Zeitraum nicht mehr erkannt bzw. detektiert werden, aus dem System gelöscht oder in ihrer Relevanz zurückgestuft werden.

Danach werden die Grenzen der zu bearbeitenden Fläche sowie Hindernisse d. h. deren Abmessungen bestimmt. In einem nächsten Schritt erfolgt die Bestimmung eines Pfades für die Bewegung des Fahrzeuges und im letzten Schritt eine Bearbeitung des Bodens.

Besonders bevorzugt weist der Verfahrensschritt zur Bestimmung der Positionen der Reflektionseinrichtungen mehrere Verfahrensschritte auf. In einem ersten Schritt wird wenigstens ein erstes, zweiachsiges Koordinatensystem mit einem vorbestimmten Ausgangspunkt festgelegt. In diesem Koordinatensystem wird die Fahrzeugposition bestimmt. In einem weiteren Schritt werden von dem Fahrzeug gerichtete physikalische Signale ausgesendet, und die von der Reflektionseinrichtung reflektierten Signale am Fahrzeug empfangen. Aus den empfangenen Signalen werden die Winkelpositionen der Reflektionseinrichtungen in Bezug auf das Fahrzeug bestimmt. Anschließend wird das Fahrzeug in seiner Position verändert, das heißt an einen weiteren vorbestimmten Punkt gefahren. An diesem weiteren vorbestimmten Punkt werden die entsprechenden Winkelpositionen der Reflektionseinrichtungen bestimmt. In einem letzten Schritt wird die Position der Reflektionseinrichtungen bezüglich des Fahrzeuges bestimmt.

Besonders bevorzugt weist auch die Feststellung der Bodengrenzen und der Hindernisse mehrere Verfahrensschritte auf. Zunächst wird das Fahrzeug entlang der Bodengrenzen sowie der Hindernisse bewegt, und dann die einzelnen Positionen des Fahrzeuges in der Speichereinrichtung der Mikroprozessoreinrichtung gespeichert. Aus den so gewonnenen Daten wird die Fahrzeugposition ermittelt. Besonders bevorzugt wird die Position des Fahrzeuges dadurch festgelegt, dass zunächst eine angenäherte Fahrzeugposition mit Hilfe von wenigstens zwei, bevorzugt drei physikalischen Signalen bestimmt wird, und dann eine genaue Position des Fahrzeuges, insbesondere mit Hilfe eines vierten Signals bestimmt wird.

Besonders bevorzugt werden bei der Bestimmung des Bewegungspfades zunächst die Bearbeitungsgrenzen aus den Positionsdaten des Fahrzeuges bestimmt, dann die ermittelten Begrenzungslinien korrigiert, und schließlich zusätzliche Bearbeitungsflächen bzw. Hindernisse hinzugefügt.

Weitere Vorteile und Einzelheiten der vorliegenden Erfindung ergeben sich aus den beigefügten Darstellungen.

Darin zeigen:

Fig. 1        eine schematische Darstellung eines Grundstückes mit einer zu bearbeitenden Fläche;

Fig. 2        ein erfindungsgemäßes Fahrzeug zur Bodenbearbeitung sowie eine Reflektionseinrichtung;

Fig. 3        eine detaillierte Darstellung der Sende- und Empfangseinrichtung;

Fig. 4        eine Darstellung zur Veranschaulichung der Bestimmung der Fahrzeugposition;.

Fig. 5a-5c    Koordinatensysteme zur Erläuterung der Bestimmung der Rasenmäherposition;

Fig. 5d        schematische Darstellung der Positionskorrektur einer Reflexionseinrichtung;

Fig. 6a        eine Darstellung des bestimmten Pfades des Fahrzeuges nach einem ersten Verfahrensschritt;

Fig. 6b        die Bestimmung des Pfades nach einem zweiten Verfahrensschritt;

Fig. 6c        den Bearbeitungspfad des Fahrzeuges;

Fig. 7a        ein für das Verfahren zur Bestimmung der Position repräsentatives Flußdiagramm;

Fig. 7b          ein Ausschnitt aus dem Flußdiagramm von Fig. 7.

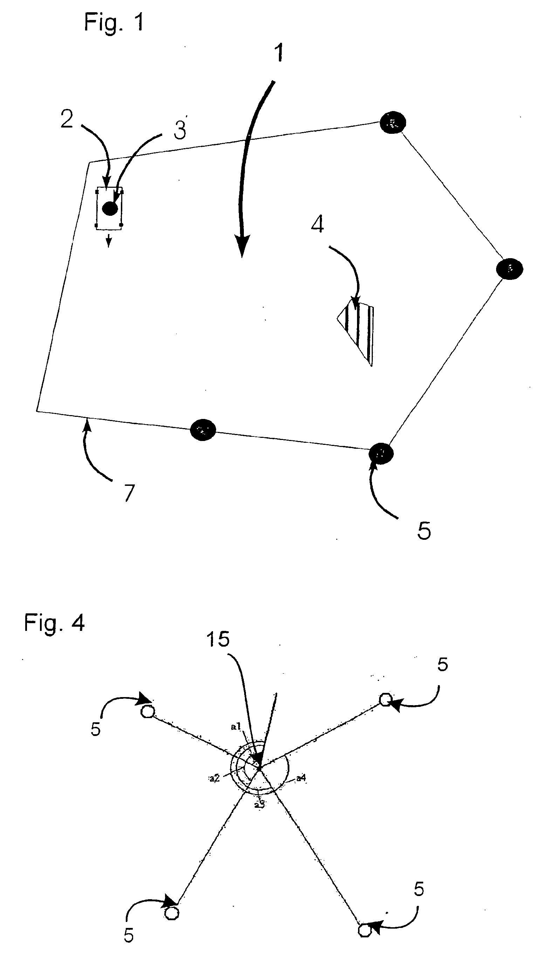

Fig. 1 zeigt eine schematische Darstellung eines Grundstückes 1 mit einer zu bearbeitenden Fläche. Bei dieser zu bearbeitenden Fläche kann es sich beispielsweise um einen Rasen handeln, der mit Hilfe eines Rasenmähers 2 geschnitten wird. Das Bezugszeichen 7 zeigt die Außengrenzen der zu bearbeitenden Fläche an, wobei es sich beispielsweise um die Grenzen des Grundstücks handeln kann. Diese Grenzen wurden als gerade Linien eingezeichnet, es sind jedoch auch gekrümmte Linien denkbar bzw. Flächen, welche mehr oder weniger als die hier gezeigten Ecken aufweisen. Das Bezugszeichen 3 bezieht sich auf eine auf dem Fahrzeug 2 aufgebrachte Sendeeinrichtung zur Aussendung eines optisch erfaßbaren Signals. Das Bezugszeichen 5 kennzeichnet eine Reflektionseinrichtung, welche hier auf einem Eckpunkt der Grenzlinie vorgesehen ist. Die Empfangs- bzw. Reflektionseinrichtung 5 kann jedoch auch an einem anderen Punkt als an der Ecke angebracht sein, oder auch innerhalb oder außerhalb der durch die Außengrenzen angezeigten Grundstücksfläche. Das Bezugszeichen 4 stellt ein innerhalb der Grundstücksfläche liegendes Hindernis dar. Dabei kann es sich beispielsweise um einen Baum oder einen Strauch handeln oder auch um Objekte wie Kinderschaukeln oder dergleichen.

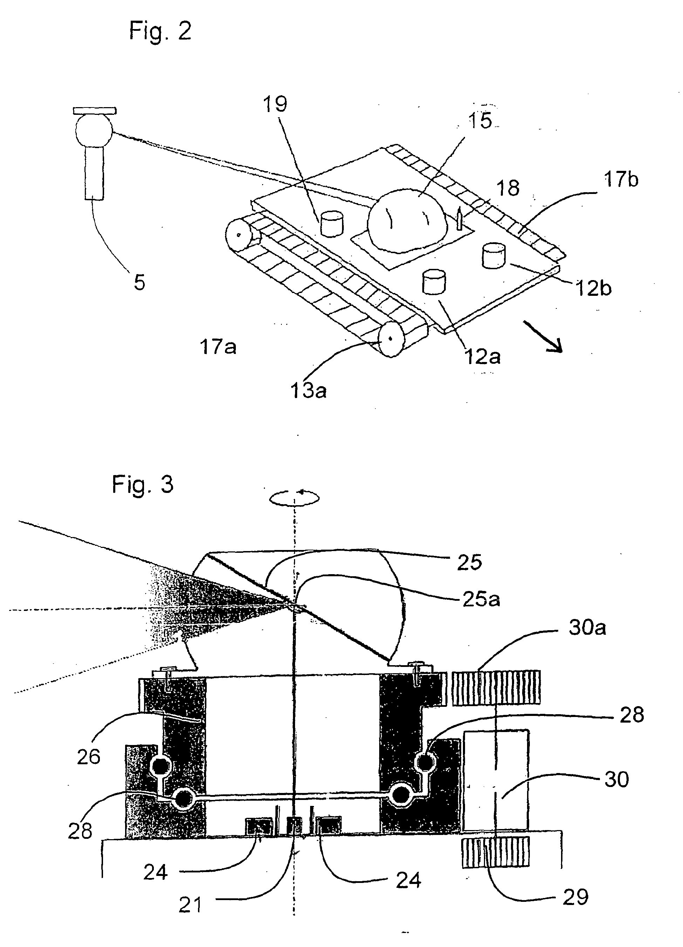

Fig. 2 zeigt eine schematische Darstellung eines erfindungsgemäßen Fahrzeuges zur Bodenbearbeitung 10 sowie eine Reflektionseinrichtung 20. In dieser Ausführungsform weist das Fahrzeug einen ersten Motor 12a sowie einen zweiten Motor 12b zum Antrieb zweier vorderer Räder 13a und 13b (nicht sichtbar) auf, wobei diese Räder über Ketten 17a und 17b mit hinteren Rädern verbunden sind. Die Vorrichtung weist ferner einen weiteren Motor 19 zum Betreiben der Schneideinrichtung auf. Zur Steuerung des Motors ist ein Signalverarbeitungssystem 18 vorgesehen. Eine Antenne dient zum Empfang von Steuerungssignalen.

Die Funktionsweise des Signalverarbeitungssystems 15 wird unter Bezugnahme auf Fig. 3 erläutert. Das Signalverarbeitungssystem 15 weist eine Sendeeinrichtung 21, wie beispielsweise eine Laserdiode, auf. Das von dieser Laserdiode ausgesendete Signal wird über einen geneigten Spiegel 25 in seiner Richtung umgelenkt. Der geneigte Spiegel 25 weist gleichzeitig bevorzugt Einrichtungen auf, welche das von der Sendeeinrichtung gesendete Signal in eine Richtung aufweiten. Dies kann beispielsweise durch eine konvexe Oberfläche dieses Spiegels erreicht werden.

Gemäß einer bevorzugten Ausführungsform sind diese Einrichtungen optische Elemente, welche wie zum Beispiel eine konkave oder konvexe Oberfläche das Signal insbesondere ein optisches Signal in seiner Ausbreitungsrichtung verändern. Diese optischen Elemente können ferner Linsen sein, wie sie beispielsweise als Zylinderlinsen in der Technik bekannt sind und somit keiner weiterreichenden Erläuterung bedürfen.

Der Spiegel ist auf einem Spiegelkopf 26 angebracht, der selbst über Lager 28 gegenüber dem Rasenmäher drehbar gelagert ist. Ein mit einem Zähler 29 versehener Motor 30 dient dazu, den Spiegelkopf zu drehen, wobei die Drehachse im wesentlichen senkrecht zu der durch die vier Räder des Rasenmähers aufgespannten Ebene liegt. Das von dem Spiegel umgelenkte Signal trifft auf die Reflektionsrichtung 20 (vgl. Fig. 2) und wird von dort zurück an das Signalverarbeitungssystem 15 gesendet und schließlich von einer Empfangseinrichtung 24 empfangen.

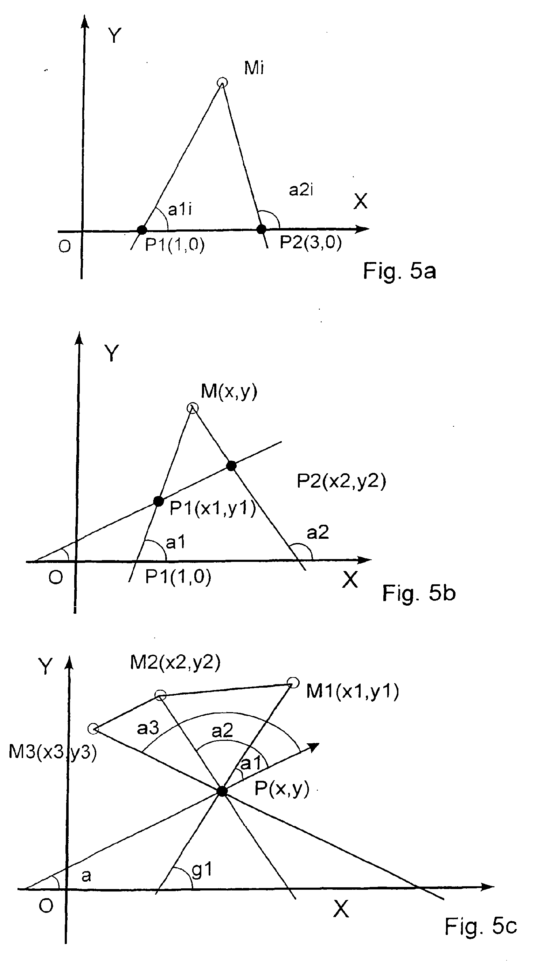

Fig. 4 zeigt eine schematische Darstellung zur Veranschaulichung der Bestimmung der Fahrzeugposition. Die Signalverarbeitungseinrichtung ermittelt die Lage der vier Reflektionseinrichtungen, in dem die Winkel a1 -a4 zwischen der Verarbeitungseinrichtung 15 und den einzelnen Reflektionseinrichtungen bestimmt werden, was unten unter Bezugnahme auf die Figuren 5a bis 5c eingehend erläutert wird.

In einem ersten Verfahrensschritt werden die Lagen der einzelnen Reflektionseinrichtungen erkannt. Dazu wird ein Koordinatensystem 40 definiert. Dieses Koordinatensystem weist einen Ursprungspunkt O auf, der beispielsweise als Ausgangspunkt für die Bewegung des Rasenmähers verwendet werden kann. An dieser Stelle kann sich beispielsweise ein Abstellplatz bzw. eine Ladestation für den Rasenmäher befinden. In einem ersten Schritt wird der Rasenmäher von dem Ausgangspunkt aus auf einen Punkt $P_1$ verschoben. An diesem Punkt werden, wie in Fig. 4 gezeigt, die einzelnen Azimutwinkel a1 - a4 der Reflektionseinrichtungen aufgenommen. Unter dem Azimutwinkel wird der Winkel eines Höhenkreis verstanden, und im Rahmen dieser Erfindung der Winkel, den zwei Reflektionseinrichtungen mit dem Signalverarbeitungssystem einschließen. Genauer gesagt werden nur die Winkel bestimmt, die zwei Reflexionseinrichtungen mit der Sendeeinrichtung einschließen - in dem Koordinatensystem wird die Lage der einzelnen Reflexionseinrichtungen mit $M_i$ bezeichnet. Anschließend wird das Fahrzeug an einen weiteren Punkt $P_2$ bewegt und wiederum die einzelnen Azimutwinkel a1 bis a4 aufgenommen. Zu diesem Zweck wird der Kopf der Signalverarbeitungseinrichtung in einer konstanten Richtung entlang der x-Achse gehalten. Zur Festlegung der X-Achse können beispielsweise Seile, ein kleiner Hilfsspiegel vor der Garage oder ähnliches verwendet werden. Die Position der Reflexionseinrichtung ergibt sich damit gemäß folgender Formel:

$$P_2 M_i = \frac{2}{\sin(a_{2i} - a_{1i})} \sin(a_{1i})$$

wobei

$$x_i = 2 + P_2M \cos(a_{2i})$$

und

$$y_i = P_2M \sin(a_{2i})$$

Dabei ist $P_2Mi$ die Strecke vom Punkt $P_2$ zum Punkt $Mi$, der die Position einer der Reflektionseinrichtungen bezeichnet, wobei diese Position nach x- und y-Komponente aufgespaltet ist. $a_{1i}$ bezeichnet den Winkel zwischen der x-Achse und der Strecke $P_1M$, $a_{2i}$ den Winkel zwischen der x-Achse und der Strecke $P_2M_i$, $x_i$ und $y_i$ und die x- und y-Koordinate des Punkts $M_i$.

Nachdem mit diesem Verfahren die Positionen sämtlicher Reflektionseinrichtungen fest bestimmt werden, kann das Fahrzeug über den Rasen bewegt werden und seine jeweilige Position, basierend auf den nunmehr bekannten Positionen der Reflektionseinrichtungen, bestimmt werden.

Falls auf dem Gelände Hindernisse, wie beispielsweise Bäume, Sträucher oder ähnliches vorhanden sind, können unter Umständen einige der Reflektionseinrichtungen in den ersten beiden Positionen $P_1$ und $P_2$ nicht mit dem optischen Signal erreicht werden. In diesem Fall ist es nötig, das Fahrzeug eventuell auch an nicht auf der x-Achse liegende Stellen zu bewegen, wie beispielsweise an die Punkte $P_3$ und $P_4$, welche in Fig. 5b dargestellt sind, um ein Signal der einzelnen Reflektionseinrichtungen zu erhalten. In diesem Fall ergibt sich die Position der einzelnen Reflektionseinrichtungen nach folgender Formel:

$$P_2M = \frac{P_1P_2}{\sin(a_2 - a_1)} \sin(a_1 - a)$$

wobei $x = x_2 + P_2M \cos(a2)$ und $y = y_2 + P_2M \sin(a2)$

Dabei ist $P_1P_2$ die Strecke von $P_1$ nach $P_2$, a der Winkel einer durch $P_1$ und $P_2$ verlaufenden Gerade mit der x-Achse.

Tatsächlich werden die bestimmten Azimuthwinkel aufgrund von mechanischen Beschränkungen Fehler aufweisen, welche in einer Ungenauigkeit bei der Bestimmung der einzelnen Positionen der Reflektionseinrichtungen münden. Um dieses Problem zu beheben, werden die Positionen der einzelnen Reflektionseinrichtungen, basierend auf einer Vielzahl von Signalen, optimiert. Dazu werden zunächst sämtliche Signale, die von einer speziellen Reflektionseinrichtung reflektiert wurden, aufgenommen, bis die Anzahl der aufgenommenen Signale eine vorbestimmte Anzahl (beispielsweise 50) erreicht. Auf Grundlage dieser Daten wird die Position der Reflektionseinrichtung neu berechnet, um Fehler möglichst gering zu halten.

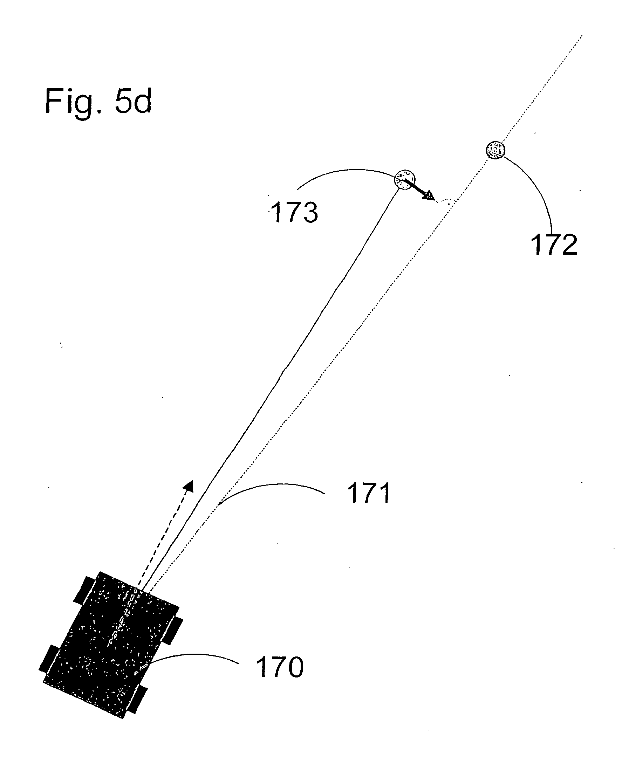

Fig. 5d zeigt eine schematische Darstellung eines Korrekturvorgangs bzw. eines Lernvorgangs für die Bestimmung einer tatsächlichen oder wenigstens annähernd realen Position einer Reflexionseinrichtung.

Dabei bezeichnet das Bezugszeichen 170 ein Fahrzeug gemäß der vorliegenden Erfindung, welches ein Signal 171 aussendet, das an der Reflexionseinrichtung 172 reflektiert und an das Fahrzeug 170 wenigstens teilweise zurückgesendet wird.

Geht man nun davon aus, daß im Rahmen des vorausgegangenen Betriebs des Fahrzeugs die Positionen einer Reflektionseinrichtung bereits gespeichert wurden, so kann sich aus der berechneten Position 173 in Bezug auf die reale Position der Reflektionseinrichtung 172 eine Differenz/Abweichung ergeben, welche durch eine Korrektur schrittweise reduziert wird.

In einem weiteren Verfahrensschritt werden die Grenzen des Grundstücks sowie die behindernden Objekte berücksichtigt. Dies wird dadurch erreicht, dass das Fahrzeug vom Benutzer entlang der Flächenbegrenzungen sowie entlang der einzelnen Hindernisse bewegt wird. Mit anderen Worten, jede Position des Fahrzeuges wird aufgenommen und die einzelnen Positionen in Folge als Pfad für das Fahrzeug aufgenommen.

Daher besteht eine wesentliche Aufgabe der Erfindung darin, die Position des Fahrzeuges mit hoher Genauigkeit zu berechnen. In Fig. 5c ist eine derartige exakte Berechnung der Position dargestellt. Die Position des Fahrzeuges wird zunächst aus drei von Reflektionseinrichtungen stammenden Signalen berechnet. Für den Fall, dass mehr als drei Signale vorhanden sind, kann die Berechnung der Position optimiert werden. In dem Koordinatensystem bezeichnet P die Lage des Fahrzeuges.Die Sehnen $M_1M_2$ und der Winkel (a2 - a1) in Fig. 5c bestimmen einen Kreis, die Sehne $M_2M_3$ und der Winkel a3 - a2 bestimmen einen weiteren Kreis, und die Schnittpunkte dieser beiden Kreise sind $M_2$ und der Punkt P, d. h. die Lage des Fahrzeuges. Optional können für den Fall, dass mehr als drei Signale zur Verfügung stehen, mehrere Positionen aus verschiedenen Signalen aufgenommen werden und dann die Werte ausgewählt werden, welche die geringsten Fehler aufweisen bzw. eine Mittelung des sich ergebenden Punkts P vorgenommen werden. Zur Position des Fahrzeuges kann auch der Winkel g1 zwischen der x-Achse und der in Fig. 5c gezeigten Strecke PM1 berechnet werden und damit die Richtung dieser Strecke. Mit dieser Methode wird diese Richtung für jede Lage jeder Reflektionseinrichtung und die momentane Lage des Fahrzeuges berechnet. Nach Anwendung dieser Methode werden verschiedene Werte für die Fahrzeugposition ausgerechnet und deren Durchschnittswert als endgültige Position des Fahrzeugs angesehen.

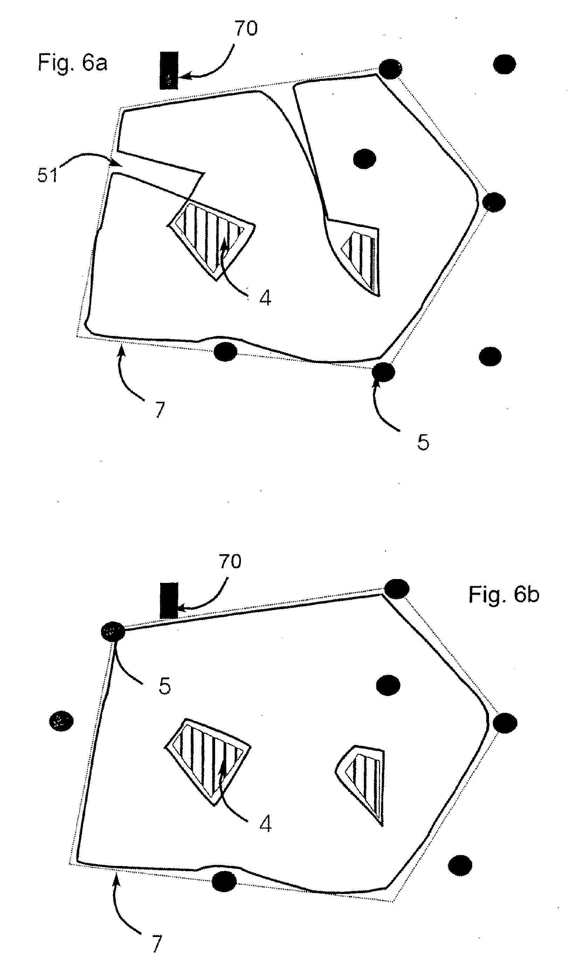

In einem letzten Schritt werden die ermittelten Grenzen und Pfade bearbeitet, was in den Figuren 6a und 6b dargestellt ist. Aus den berechneten Positionen kann sich beispielsweise der in Fig. 6a gezeigte Bewegungspfad für den Rasenmäher ergeben. Dieser Pfad ergibt sich, nachdem das Fahrzeug entlang der gepunkteten Linie, d. h. zunächst entlang der Grundstücksgrenzen und dann um die Hindernisse herum, bewegt wurde. Eine Bearbeitung dieses Pfades erfolgt, indem einerseits die Grundstücksgrenzen als Polygon (vgl. Fig. 6b) und andererseits die einzelnen Hindernisse als geschlossene Linienverläufe dargestellt werden.

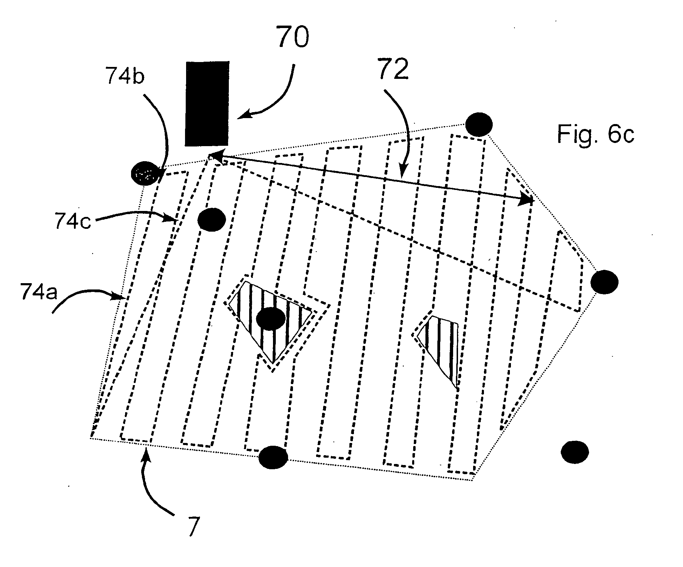

Im Wesentlichen werden dabei unnötige Linien, d. h. solche Linien, welche nicht um Grenzen oder Behinderungen verlaufen, gelöscht und andere Punkte, hier z. B. an der Stelle 51 gezeigt, hinzugefügt. Schließlich werden die in Fig. 6c gezeigten "Zickzackpfade" entlang der Grundstücksgrenzen erzeugt. Bevorzugt wird dabei zunächst die längere Seite des Rasens ausgewählt und dann eine Folge von Segmentlinien 53 parallel zu dieser Längsseite erzeugt. Nachdem das Fahrzeug, d. h. der Rasenmäher, ein Segment abgemäht hat, wird er zu dem nächstliegenden Segment gelangen und dieses mähen. Der Bewegungspfad des Rasenmähers ist in Fig. 6c durch die gestrichelte Linie dargestellt. Beginnend von einem bestimmten Ausgangspunkt 70, welcher z. B. der Ort einer Ladestation sein kann, bewegt sich der Mäher zunächst entlang einer zu einer kurzen Seite des Grundstücks im Wesentlichen parallelen Linie 74a und mäht den Rasen. Am Ende 74b der Fläche angelangt wendet der Mäher und mäht das nächste Segment 74c wobei die Breite des Segments im wesentlichen durch den Durchmesser des Schneidegeräts festgelegt wird. Auf diese Weise wird der Rasen segmentartig gemäht.

Gemäß einer weiteren besonders bevorzugten Ausführungsform kann der Bearbeitungsweg des Fahrzeugs sowohl in Bezug auf einen optimierten Bearbeitungsaufwand (kürzester Weg) oder aber auch bezüglich qualitativer Anforderungen mit einer Vielzahl von frei wählbaren Bearbeitungswegen festgelegt werden.

Sollte während des Mähens ein Laden des Akkus notwendig werden, kehrt der Rasenmäher zum Ausgangspunkt zurück, wird dort aufgeladen und kehrt an die Stelle zurück, an der das Mähen unterbrochen worden war. Dies ist durch den Doppelpfeil 72 veranschaulicht.

Ferner liegt es auch im Sinn der vorliegenden Erfindung, den Arbeitsprozess in mehrere Phasen zu unterteilen. Hierbei kann beispielsweise ein Bearbeitungsvorgang in mehrere einzelne Phasen unterteilt werden, wobei in den Zwischenphasen das Fahrzeug, insbesondere dessen Energiequelle geladen wird.

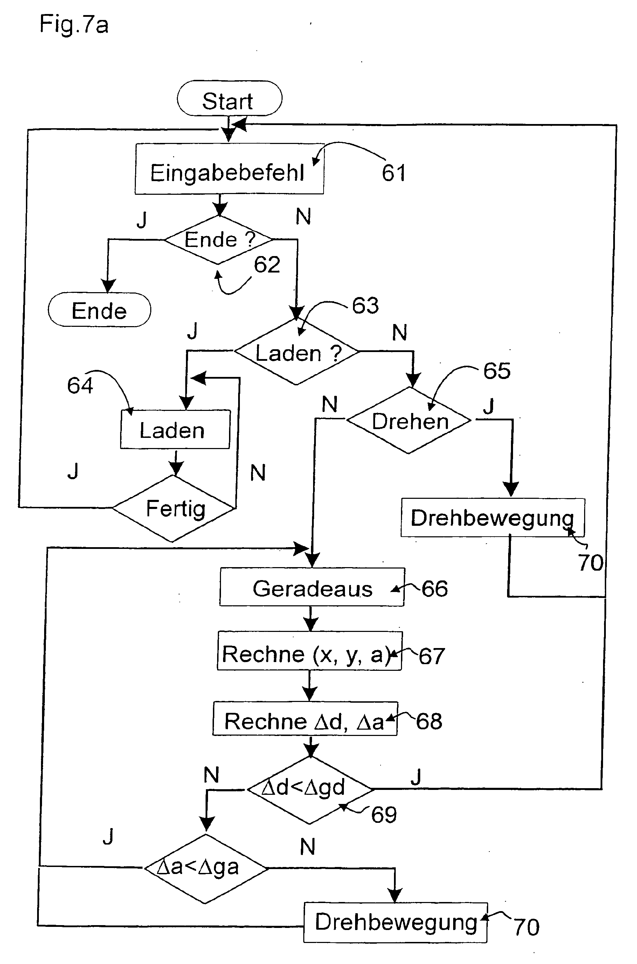

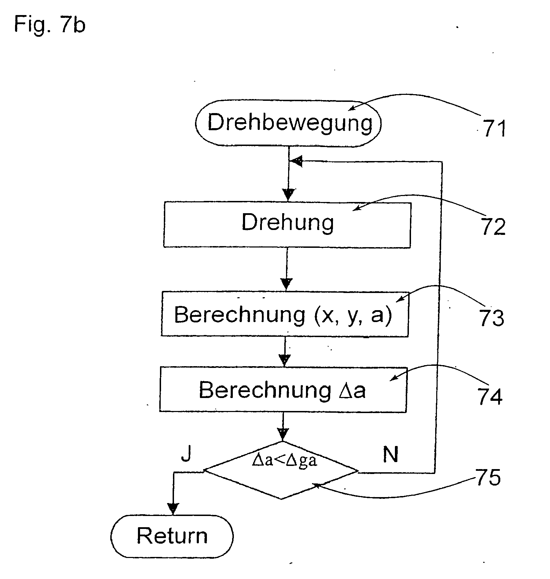

Unter Bezugnahme auf die Figuren 7a und 7b wird die Bewegung des Fahrzeuges genauer erläutert.

Die Bewegung des Fahrzeuges kann in eine geradlinige Bewegung einerseits und eine Drehbewegung andererseits unterteilt werden. Natürlich ist es jedoch auch möglich, eine Drehbewegung während einer Vorwärtsbewegung des Fahrzeugs zu erreichen. Eine Drehbewegung kann beispielsweise dadurch erreicht werden, dass die beiden Motoren 12a und 12b in Fig. 2 in unterschiedliche Richtungen drehen oder dadurch, dass einer der beiden Motoren stillsteht, während der andere die dazugehörige Kette bewegt. Das in Fig. 7 gezeigte Flussdiagramm veranschaulicht die Steuerung des Fahrzeuges. Zu Beginn des Mähvorgangs wartet die Prozessoreinrichtung auf einen Startbefehl 61, und, sollte dieser nicht erfolgen, wird das Gerät abgeschaltet. In einem nächsten Schritt 63 wird der Ladezustand des Fahrzeuges überprüft; falls eine Aufladung der Akkumulatoren nötig ist, wird in Schritt 64 die Aufladung durchgeführt, bis die Akkumulatoren voll aufgeladen sind. Falls keine Aufladung der Batterien erfolgt oder notwendig ist, wartet das Fahrzeug einen Befehl zur Drehung ab. Falls ein derartiger Befehl vorliegt, wird eine Drehbewegung durchgeführt, welche im Detail nachfolgend beschrieben wird. Falls kein Befehl zur Drehung erfolgt, wird sich das Gerät linear bewegen, wobei in den Schritten 67 und 68 die neue Position des Fahrzeugs berechnet wird. Hieraus ergibt sich auch die zurückgelegte Strecke. In einem nächsten Schritt 69 wird abgefragt, ob die zurückgelegte Strecke größer oder kleiner ist als eine an Grundstücksgrenzen oder behindernden Objekten ausgerichtete Strecke ΔgD. Sollte dies der Fall sein, werden wieder die Schritte 61 bis 68 von neuem durchgeführt. Sobald die gewünschte Distanz Δgd erreicht ist, wird in einem nächsten Schritt abgefragt, ob die Winkeländerung des Fahrzeuges kleiner ist als eine vorgegebene Winkeländerung Δga. Falls dies der Fall ist, wird das Verfahren mit den Schritten 66 bis 68, d. h. einer Vorwärtsbewegung des Rasenmähers, fortgesetzt. Falls dies nicht der Fall ist, wird eine Drehbewegung des Gerätes durchgeführt.

In Fig. 7b ist ein Flußdiagramm für die Drehbewegung des Rasenmähers dargestellt. Nach dem Erhalt eines Drehbefehls dreht sich der Rasenmäher, um anschließend seine neuen Positionen, basierend auf den Koordinaten x und y und der Azimuthwinkelposition a, zu berechnen. Sollte die Winkeländerung Δa unter einem bestimmten vorgegebenen Wert Δga liegen, wird die Drehung des Fahrzeugs fortgesetzt; ist dies nicht der Fall, wird, wie in Fig. 7a gezeigt, wieder zum jeweils folgenden Schritt übergegangen, d. h. der Mäher bewegt sich wieder geradlinig oder wartet auf einen neuen Eingabebefehl.

**Patentansprüche**

1. Fahrzeug zur Bodenbearbeitung (2), insbesondere ein autonomes Fahrzeug zur Bodenbearbeitung, mit einer Vorrichtung zum Steuern des Fahrzeuges mit:

   - wenigstens einer Sendeeinrichtung(3, 21), welche wenigstens ein physikalisch erfassbares Signal in wenigstens eine frei wählbare Richtung, bezogen auf das Fahrzeug aussendet;
   - einer Vielzahl von vom Fahrzeug getrennt angeordneten Reflexionseinrichtungen (5), welche das von der Sendeeinrichtung ausgesendete Signal empfangen und in wenigstens einer, bevorzugt in einer Vielzahl von Richtungen reflektieren und/oder aussenden;
   - wenigstens einer Empfangseinrichtung(24), welche dazu geeignet ist, diese Signale, welche von der Sendeeinrichtung ausgesandt und von der Reflexionseinrichtung reflektiert und/oder ausgesandt werden, zu empfangen;
   - wenigstens einer im Fahrzeug angeordneten Mikroprozessor Einrichtung, welche durch ein Programm gesteuert ist, das in einem mit der Sende- und Empfangseinrichtung verbundenen Speicher abgespeichert ist, wobei diese Mikroprozessor-Einrichtung unter Verwendung von wenigstens zwei, bevorzugt wenigstens drei aus unterschiedlichen Richtungen empfangenen Signalen die Position des Fahrzeuges ermittelt;
   - einer Steuereinrichtung für wenigstens die Empfangseinrichtung bevorzugt die Empfangs- und die Sendeeinrichtung, welche bewirkt, dass die Signalrichtung verändert wird;

   **dadurch gekennzeichnet, dass**

   - in einem ersten Schritt eine angenäherte Position (P) der Reflexionseinrichtung in Bezug auf einen vorgegebenen Ausgangspunkt bestimmt wird, und
   - das in wenigstens einem weiteren Schritt, die exakte Position der Reflexionseinrichtung unter Verwendung eines Korrekturalgorithmus in bezug auf den Ausgangspunkt bestimmt wird.

2. Fahrzeug zur Bodenbearbeitung gemäß Anspruch 1,
   **dadurch gekennzeichnet, dass**
   die Sendeeinrichtung das Signal in vorgegebenen Intervallen aussendet.

3. Fahrzeug zur Bodenbearbeitung gemäß wenigstens einem der vorhergehenden Ansprüche,
   **dadurch gekennzeichnet, dass**
   die Intervalle Frequenzen zwischen 0,1 und 1000 Hz, bevorzugt zwischen 1 und 100 Hz, besonders bevorzugt zwischen 5 und 50 Hz und insbesondere 10 Hz aufweisen.

4. Fahrzeug zur Bodenbearbeitung nach wenigstens einem der vorhergehenden Ansprüche,
   **dadurch gekennzeichnet, dass**
   das optisch erfassbare Signal Licht wenigstens einer vorgegebenen Wellenlänge ist.

5. Fahrzeug zur Bodenbearbeitung nach wenigstens einem der vorhergehenden Ansprüche,
   **dadurch gekennzeichnet, dass**
   die Wellenlänge des optisch erfassbaren Signals zwischen dem ultravioletten Bereich und dem Ferninfrarotbereich des Wellenlängenspektrums, bevorzugt im Infrarotbereich des Wellenlängenspektrums, liegt.

6. Fahrzeug zur Bodenbearbeitung nach wenigstens einem der vorhergehenden Ansprüche,
   **dadurch gekennzeichnet, dass**
   die Reflektionseinrichtung (5) neben der Richtung des optisch erfassbaren von der Sendeeinrichtung (3, 21) ausgesendeten Signals wenigstens noch eine weitere physikalische Eigenschaft des optisch erfassbaren Signals beeinflusst.

7. Fahrzeug zur Bodenbearbeitung nach wenigstens einem der vorhergehenden Ansprüche,

**dadurch gekennzeichnet, dass**
die von der Reflektionseinrichtung(5) geänderten physikalischen Eigenschaften des optisch erfassbaren Signals aus einer Gruppe von Eigenschaften ausgewählt sind, welche die Wellenlänge des Signals, den Polarisationszustand des Signals, die Polarisationsrichtung, die Phase des Signals, die Streuung, das Reflexionsverhalten oder dergleichen enthält.

8. Fahrzeug zur Bodenbearbeitung nach wenigstens einem der vorhergehenden Ansprüche,
**dadurch gekennzeichnet, dass**
die Empfangseinrichtung (24) und/oder die Reflexionseinrichtung(5) Elemente aufweist, welche wenigstens eine physikalische Eigenschaft des von der Reflektionseinrichtung reflektierten Signals ändert bzw. detektiert;

9. Fahrzeug zur Bodenbearbeitung nach wenigstens einem der vorhergehenden Ansprüche,
**dadurch gekennzeichnet, dass**
die Elemente zur Änderung wenigstens einer der physikalischen Eigenschaften des reflektierten Lichtes aus einer Gruppe ausgewählt sind, welche Reflektionsgitter, Polarisationsgitter, Polarisationsfilter, elektrooptische Materialien oder dergleichen enthält.

10. Fahrzeug zur Bodenbearbeitung nach wenigstens einem der vorhergehenden Ansprüche,
**dadurch gekennzeichnet, dass**
die Reflexionseinrichtung (5) aus einer Gruppe von Einrichtungen ausgewählt ist, welche Spiegel, insbesondere Kugelspiegel, Planarspiegel oder andere reflektierende Gegenstände wie beispielsweise Regenrinnen, Gartenlampen, Wäschespinnen oder entsprechende Gegenstände aufweist, welche wenigstens zeitweise an einer ortsfesten Position angebracht sind.

11. Fahrzeug zur Bodenbearbeitung nach wenigstens einem der vorhergehenden Ansprüche,
**dadurch gekennzeichnet, dass**
das Fahrzeug sicherheitstechnische Einrichtungen aus der Gruppe von Einrichtungen aufweist, die Untergreifschutz, Neigungssensoren, Berührungssensoren, Drehmomentbestirnmung beispielsweise für Bearbeitungsgerät, Überspannungsschutz, Überlastungsschutz, Feuchtigkeitssensoren, etc. enthält.

12. Fahrzeug zur Bodenbearbeitung nach wenigstens einem der vorhergehenden Ansprüche,
**dadurch gekennzeichnet, dass**
eine weitere Mikroprozessoreinrichtung vorgesehen ist, welche nicht am Fahrzeug angeordnet ist und welche zur Steuerung des Fahrzeugs (2) beiträgt.

13. Fahrzeug zur Bodenbearbeitung nach wenigstens einem der vorhergehenden Ansprüche,
**dadurch gekennzeichnet, dass**
das Fahrzeug (2) wenigstens einen Sensor aufweist, der aus einer Gruppe von Sensoren ausgewählt ist, welche Temperatursensoren, Batterieladungssensoren, Feuchtigkeitssensoren, Neigungssensoren, Abstandssensoren, Ultraschallsensoren, Feldänderungssensoren, Windsensoren und Drehmoment sensoren enthält.

14. Fahrzeug zur Bodenbearbeitung nach wenigstens einem der vorhergehenden Ansprüche,
**dadurch gekennzeichnet, dass**
eine Vorrichtung zum Schneiden von Gras, zum Aussäen von Samen und/oder zum Düngen und/oder zum Bewässern und/oder zum Reinigen vorgesehen ist.

15. Fahrzeug zur Bodenbearbeitung gemäß Anspruch 14,
**dadurch gekennzeichnet, dass**
der Abstand der Einrichtung zum Schneiden von Gras zu dem zu bearbeitenden Boden variabel ist.

16. Fahrzeug zur Bodenbearbeitung gemäß Anspruch 15,
**dadurch gekennzeichnet, dass**
der Abstand der Schneideinrichtung zu dem zu bearbeitenden Boden von der im Fahrzeug angeordneten Mikroprozessoreinrichtung gesteuert wird.

17. Fahrzeug zur Bodenbearbeitung nach wenigstens einem der vorhergehenden Ansprüche,
**dadurch gekennzeichnet, dass**
eine weitere Sendeeinrichtung und eine weitere Empfangseinrichtung vorgesehen sind, welche dazu geeignet sind, Unregelmäßigkeiten des zu bearbeitenden Bodens zu erfassen.

**18.** Fahrzeug zur Bodenbearbeitung nach wenigstens einem der vorhergehenden Ansprüche,
**dadurch gekennzeichnet, dass**
das Fahrzeug über mehrere, insbesondere vier Räder verfügt.

**19.** Fahrzeug zur Bodenbearbeitung nach wenigstens einem der vorhergehenden Ansprüche,
**dadurch gekennzeichnet, dass**
wenigstens jeweils zwei der vier Räder (13a, 13b) miteinander drehfest verbunden sind.

**20.** Fahrzeug zur Bodenbearbeitung gemäß wenigstens einem der vorhergehenden Ansprüche,
**dadurch gekennzeichnet, dass**
die Richtungsänderung des Signals mittels einer Reflexionsvorrichtung (5), insbesondere einem Spiegel (25) erfolgt, welche wenigstens um eine Achse drehbar gelagert ist.

**21.** Fahrzeug zur Bodenbearbeitung gemäß wenigstens einem der vorhergehenden Ansprüche,
**dadurch gekennzeichnet, dass**
die durch die Reflexionsvorrichtung(5) aufgespannte Ebene in einem vorgegebenen Winkel zu der Ebene angeordnet ist, welche im wesentliche durch die Radachsen des Fahrzeuges aufgespannt wird.

**22.** Fahrzeug zur Bodenbearbeitung gemäß wenigstens einem der vorhergehenden Ansprüche,
**dadurch gekennzeichnet, dass**
die Reflexionsvorrichtung(5) um eine Achse drehbar gelagert ist, welche im wesentlichen senkrecht zu der Ebene ist, die im wesentlichen durch die Radachsen der Fahrzeuges aufgespannt wird.

**23.** Fahrzeug zur Bodenbearbeitung gemäß wenigstens einem der vorhergehenden Ansprüche,
**dadurch gekennzeichnet, dass**
in der Sendeeinrichtung (3, 21) eine optische Vorrichtung vorgesehen ist, welche das physikalisch erfassbare Signal in einem vorgegebenen Winkel streut und/oder beugt und/oder reflektiert.

**24.** Fahrzeug zur Bodenbearbeitung gemäß wenigstens einem der vorhergehenden Ansprüche,
**dadurch gekennzeichnet, dass**
die Streuung bzw. Beugung des physikalisch erfassbaren Signals im wesentlichen in zwei Ausbreitungsrichtungen erfolgt.

**25.** Fahrzeug zur Bodenbearbeitung gemäß wenigstens einem der vorhergehenden Ansprüche,
**dadurch gekennzeichnet, dass**
die Streuung bzw. Beugung des physikalisch erfassbaren Signals in einem Winkelbereich zwischen 0° und 180, bevorzugt zwischen 20° und 160° und besonders bevorzugt zwischen 45° und 135° erfolgt.

**26.** Fahrzeug zur Bodenbearbeitung gemäß wenigstens einem der vorhergehenden Ansprüche,
**dadurch gekennzeichnet, dass**
die Änderung des Signals durch die Reflexionseinrichtung (5) im wesentlichen passiv erfolgt.

**27.** Fahrzeug zur Bodenbearbeitung gemäß wenigstens einem der vorhergehenden Ansprüche,
**dadurch gekennzeichnet, dass**
das Fahrzeug (2) eine Vorrichtung zum Senden und Empfangen von Daten aufweist.

**28.** Fahrzeug zur Bodenbearbeitung gemäß wenigstens einem der vorhergehenden Ansprüche,
**dadurch gekennzeichnet, dass**
eine weitere, außerhalb des Fahrzeuges (2) angeordnete, Mikroprozessor Einrichtung zur Steuerung des Fahrzeuges zur Bodenbearbeitung vorgesehen ist, welche durch ein Programm gesteuert ist und welche eine Vorrichtung zur Datenübertragung zwischen dem Fahrzeug und der Mikroprozessor Einrichtung aufweist.

**29.** Verfahren zur Steuerung eines Fahrzeuges zur Bodenbearbeitung gemäß wenigstens einem der vorstehenden Ansprüche mit folgenden Verfahrensschritten:

- Bestimmung der Positionen (M) einer Vielzahl von Reflektionseinrichtungen (5);

- Bestimmung der Grenzen (7) der zu bearbeitenden Fläche (1) sowie Bestimmung von Hindernissen (4);
- Bestimmung eines Pfades (74a, 74b, 74c) für die Bewegung des Fahrzeuges (2);
- Bearbeitung des Bodens.

**30.** Verfahren zur Steuerung eines Fahrzeuges nach Anspruch 29,
**dadurch gekennzeichnet dass**
der Verfahrensschritt zur Bestimmung der Positionen (M) der Reflektionseinrichtungen folgende Verfahrensschritte aufweist:

- Bestimmung eines wenigstens zweiachsigen Koordinatensystems (X, Y) mit einem vorbestimmten Ausgangspunkt (70);
- Bestimmung der Fahrzeugposition ($P_1$) im Koordinatensystem;
- Aussenden von gerichteten physikalischen Signalen von dem Fahrzeug (2) und Empfang der von den Reflektionseinrichtungen(5) reflektierten Signale am Fahrzeug;
- Bestimmung der Winkelpositionen ($a_1$) der Reflektionseinrichtungen in Bezug auf das Fahrzeug;
- Positionsänderung ($P_2$) des Fahrzeuges an einen weiteren vorbestimmten Punkt;
- Bestimmung der entsprechenden Winkelposition ($a_2$) der Reflektionseinrichtungen; Bestimmung der Position der Reflektionseinrichtung bezüglich des Fahrzeuges.

**31.** Verfahren zur Steuerung eines Fahrzeuges nach wenigstens einem der Ansprüche 29 bis 30,
**dadurch gekennzeichnet, dass**
die Feststellung der Bearbeitungsbereichsgrenzen und der Hindernisse folgende Verfahrensschritte aufweist:

- Bewegung des Fahrzeugs entlang der Bodengrenzen (7) sowie der Hindernisse (4);
- Ermittlung der Fahrzeugposition (P);
- Speicherung der einzelnen Positionen des Fahrzeuges in der Speichereinrichtung der Mikroprozessor-Einrichtung.

**32.** Verfahren zum Steuern eines Fahrzeuges nach wenigstens einem der Ansprüche 29 bis 31,
**dadurch gekennzeichnet, dass**
die Position des Fahrzeuges auf folgende Weise festgelegt wird:

- Bestimmung einer angenäherten Fahrzeugposition (P) mit Hilfe von wenigstens zwei, bevorzugt drei bis fünf und besonders bevorzugt eine Vielzahl von physikalisch erfassbaren Signalen;
- Bestimmung einer genaueren Position (P) des Fahrzeuges, insbesondere mit Hilfe eines vierten Signals.

**33.** Verfahren zur Steuerung eines Fahrzeugs zur Bodenbearbeitung, nach wenigstens einem der Ansprüche 29 bis 32,
**dadurch gekennzeichnet, dass**
die Bestimmung eines Bewegungspfades folgende Verfahrensschritte aufweist:

- Bestimmung der Bearbeitungsgrenzen (7) aus den Positionsdaten des Fahrzeuges;
- Korrektur der ermittelten Begrenzungslinien und
- Hinzufügen, von zusätzlichen Bearbeitungsflächen (1) bzw. von Hindernissen.

**Claims**

**1.** A soil working vehicle (2), particularly an autonomous soil working vehicle, including a device for controlling the vehicle, comprising:

- at least one emitter (3, 21) which emits at least one physically detectable signal in at least one freely selectable direction relative to the vehicle;
- a plurality of reflectors arranged separately to the vehicle which detect the signal emitted by said emitter and reflect and/or emit said signal in at least one, preferably in a plurality of directions;
- at least one detector (24) suitable for detecting said signals emitted by said emitter and reflected and/or emitted by said reflector;
- at least one microprocessor means arranged in said vehicle which is controlled by a program memorized in a memory connected to said emitter/detector means, said microprocessor means detecting the position of said vehicle in making use of at least two, preferably at least three, signals detected from different directions
- a controller for at least said detector preferably for the emitter/detector means resulting in a change in said signal direction;

**characterized in that**

- in a first step an approximated position (P) of said reflector is determined relative to a predetermined starting point, and
- that in at least one further step the exact position of said reflector is determined in making use of a correction algorithm relative to said starting point.

2. The soil worklng vehicle as set forth in claim 1
**characterized in that**
said emitter emits said signal in predetermined intervals.

3. The soil working vehicle as set forth in any of the preceding claims,
**characterized in that**
the intervals comprise frequencies between 0.1 and 1000 Hz, preferably between 1 and 100 Hz, particularly preferred between 5 and 50 Hz and more particularly 10 Hz.

4. The soil working vehicle as set forth in any of the preceding claims,
**characterized in that**
said optical detectable signal is light of at least one predetermined wavelength.

5. The soil working vehicle as set forth in any of the preceding claims,
**characterized in that**
the wavelength of said optical detectable signal is located between the ultraviolet range and the far infrared range of the wavelength spectrum, preferably in the infrared range of said wavelength spectrum.

6. The soil working vehicle as set forth in any of the preceding claims,
**characterized in that**
said reflector (5) influences, in addition to the direction of said optical detectable signal emitted by said emitter (3, 21), at least one further physical property of said optical detectable signal.

7. The soil working vehicle as set forth in any of the preceding claims,
**characterized in that**
the physical properties of said optical detectable signal altered by said reflector (5) are selected from a group of properties which include the wavelength of said signal, the polarization condition of said signal, the polarization direction, the phase of said signal, the scatter, the reflectivity or the like.

8. The soil working vehicle as set forth in any of the preceding claims,
**characterized in that**
said detector (24) and/or said reflector (5) comprise elements which alter or detect at least one physical property of said signal reflected by said reflector.

9. The soil working vehicle as set forth in any of the preceding claims,
**characterized in that**
the elements for altering at least one of the physical properties of said reflected light are selected from a group including reflection gratings, polarisation gratings, polarization filters, electrooptical materials or the like.

10. The soil working vehicle as set forth in any of the preceding claims,
**characterized in that**
said reflector (5) is selected from a group of means comprising mirrors, particularly spherical mirrors, planar mirrors or other reflecting objects such as, for example, gutters, garden lamps, clotheslines or corresponding objects attached at least temporarily to a fixed position.

11. The soil working vehicle as set forth in any of the preceding claims,
**characterized in that**

said vehicle includes safety means from the group of means comprising undergrip protection, tilt sensors, contact sensors, torque sensors, for example for working implements, overvoltage protection, overload protection, moisture sensors, etc.

**12.** The soil working vehicle as set forth in any of the preceding claims,
**characterized in that**
a further microprocessor means is provided which is not arranged on said vehicle and which contributes towards controlling said vehicle (2).

**13.** The soil working vehicle as set forth in any of the preceding claims,
**characterized in that**
said vehicle (2) comprises at least one sensor selected from a group of sensors including temperature sensors, battery charge sensors, moisture sensors, tilt sensors, spacing sensors, ultrasound sensors, field change sensors, wind sensors and torque sensors.

**14.** The soil working vehicle as set forth in any of the preceding claims,
**characterized in that**
a mower, seeder and/or fertilizer and/or watering and/or cleaning implement is provided.

**15.** The soil working vehicle as set forth in claim 14,
**characterized in that**
the spacing of said mower from the soil to be worked is variable

**16.** The soil working vehicle as set forth in claim 15,
**characterized in that**
the spacing of said cutter from the soil to be worked is controlled by the microprocessor means arranged in said vehicle.

**17.** The soil working vehicle as set forth in any of the preceding claims,
**characterized in that**
a further emitter and a further detector are provided suitable for sensing irregularities in the soil to be worked.

**18.** The soil working vehicle as set forth in any of the preceding claims,
**characterized in that**
said vehicle is provided with a plurality of, particularly four, wheels.

**19.** The soil working vehicle as set forth in any of the preceding claims,
**characterized in that**
at least two of said four wheels (13a, 13b) are interconnected via fix rotatably manner.

**20.** The soil working vehicle as set forth in any of the preceding claims,
**characterized in that**
the change in direction of said signal is produced by means of a reflector (5), particularly a mirror (25) mounted rotatable about at least one axis.

**21.** The soil working vehicle as set forth in any of the preceding claims,
**characterized in that**
the plane covered by said reflector (5) is arranged at a predetermined angle to the plane covered substantially by the wheel axles of said vehicle.

**22.** The soil working vehicle as set forth in any of the preceding claims,
**characterized in that**
said reflector (5) is rotatably mounted about an axis which is substantially perpendicular to the plane covered substantially by said wheel axles of said vehicle.

**23.** The soil working vehicle as set forth in any of the preceding claims,
**characterized in that**
provided in said emitter (3, 21) is an optical device which scatters and/or diffracts and/or reflects said physically detectable signal in a predetermined angle.

24. The soil working vehicle as set forth in any of the preceding claims,
    **characterized in that**
    scatter or diffraction of said physically detectable signal occurs substantially in two propagation directions.

25. The soil working vehicle as set forth in any of the preceding claims,
    **characterized in that**
    scatter or diffraction of said physically detectable signal occurs in an angular range between 0° and 180°, preferably between 20° and 160°, and particularly preferred between 45° and 135°.

26. The soil working vehicle as set forth in any of the preceding claims,
    **characterized in that**
    the change in said signal by the reflector (5) occurs substantially passively.

27. The soil working vehicle as set forth in any of the preceding claims,
    **characterized in that**
    said vehicle (2) comprises a device for transmitting and receiving data.

28. The soil working vehicle as set forth in any of the preceding claims,
    **characterized in that**
    for controlling said soil working vehicle a further microprocessor means is arranged remote from said vehicle which is controlled by a program and which comprises a device for data communication between said vehicle and said microprocessor means.

29. A method for controlling a soil working vehicle as set forth in any of the preceding claims, comprising the following steps in the method:

    - determining the positions (M) of a plurality of reflectors (5);
    - determining the boundaries (7) of the surface area (1) to be worked as well as determining obstacles (4);
    - determining a path (74a, 74b, 74c) for the motion of said vehicle (2);
    - working the soil.

30. The method for controlling a vehicle as set forth in claim 29,
    **characterized in that**
    the step in the method for determining the positions (M) of said reflectors comprises the following steps in the method:

    - determining an at least two-axial system of coordinates (X, Y) with a predetermined starting point (70):
    - determining said vehicle position ($P_1$) in said system of coordinates;
    - emitting directed physical signals from said vehicle (2) and detecting said signals reflected by said reflectors (5) on said vehicle;
    - determining the angular positions ($a_1$) of said reflectors relative to said vehicle
    - determining the change in position ($P_2$) of said vehicle at a further predetermined point;
    - determining the corresponding angular position ($a_2$) of said reflectors; determining the position of said reflector relative to said vehicle.

31. The method for controlling a vehicle as set forth in any of the claims 29 to 30,
    **characterized in that**
    sensing said working range boundaries and obstacles comprises the following steps in the method;

    - moving said vehicle along the soil boundaries (7) and said obstacles (4);
    - establishing said vehicle position (P);
    - memorizing the individual positions of said vehicle in said memory of said microprocessor means.

32. The method for controlling a vehicle as set forth in a ny of the claims 29 to 31,
    **characterized in that**
    the position of said vehicle is established as follows:

- determining an approximate vehicle position (P) with the aid of at least two, preferably three to five and particularly preferred, a plurality of physically detectable signals;
- determining a more precise position (P) of said vehicle, more particularly with the aid of a fourth signal.

33. The method for controlling a soil working vehicle as set forth in any of the claims 29 to 32, **characterized in that** determining a motion path comprises the following steps in the method:

- determining said working boundaries (7) from said position data of said vehicle;
- correcting said established boundary lines and
- adding additional working surface areas (1) or obstacles.


**Revendications**

1. Un véhicule pour cultiver le sol (2), en particulier un véhicule autonome pour cultiver le sol, avec un dispositif pour commander le véhicule avec :

   - au moins un émetteur (3,21) qui émet au moins un signal physiquement détectable en au moins une direction librement sélectionnable, relativement au véhicule ;
   - une pluralité de réflecteurs (5) disposés de manière séparée du véhicule qui détectent le signal émis par ledit émetteur et réfléchissent et/ou émettent ledit signal dans au moins une, de préférence une pluralité de directions ;
   - au moins un détecteur (24) convenant pour détecter lesdits signaux émis par ledit émetteur et réfléchis et/ou émis par ledit réflecteur ;
   - au moins un appareillage de microprocesseurs dans ledit véhicule qui est commandé par un programme mémorisé dans une mémoire connectée audit appareillage d'émetteur/détecteur, ledit appareillage de microprocesseurs détectant la position dudit véhicule en utilisant au moins deux, de préférence au moins trois signaux détectés de différentes directions ;
   - une unité de commande pour au moins ledit détecteur, de préférence pour l'appareillage d'émetteur/détecteur résultant en un changement dans la direction de signal ;

   **caractérisé en ce que**

   - dans une première étape une position approximée (P) dudit réflecteur est déterminée relativement à un point de départ prédéterminé, et
   - dans au moins une étape supplémentaire la position exacte dudit réflecteur est déterminée en utilisant une correction algorithmique relativement audit point de départ.

2. Un véhicule pour cultiver le sol selon la revendication 1, **caractérisé en ce que** ledit émetteur émet ledit signal dans des intervalles prédéterminés.

3. Un véhicule pour cultiver le sol selon une quelconque des revendications précédentes, **caractérisé en ce que** lesdits intervalles comprennent des fréquences entre 0,1 et 100 Hz, de préférence entre 1 et 100 Hz, particulièrement préféré entre 5 et 50 Hz et en particulier 10 Hz.

4. Un véhicule pour cultiver le sol selon une quelconque des revendications précédentes, **caractérisé en ce que** le signal détectable optiquement est de la lumière d'au moins une longueur d'onde prédéterminée.

5. Un véhicule pour cultiver le sol selon une quelconque des revendications précédentes, **caractérisé en ce que** la longueur d'onde dudit signal détectable optiquement est positionnée entre la gamme ultraviolet et la gamme infrarouge du spectre de longueur d'onde, de préférence dans la gamme infrarouge dudit spectre de longueur d'onde.

6. Un véhicule pour cultiver le sol selon une quelconque des revendications précédentes, **caractérisé en ce que**

ledit réflecteur (5) influence en plus de la direction dudit signal détectable optiquement émis par ledit émetteur (3,21), au moins une propriété physique supplémentaire dudit signal détectable optiquement.

7.   Un véhicule pour cultiver le sol selon une quelconque des revendications précédentes,
**caractérisé en ce que**
les propriétés physiques dudit signal détectable optiquement modifié par ledit réflecteur (5) sont sélectionnés d'un groupe de propriétés qui incluent la longueur d'onde dudit signal, la condition de polarisation dudit signal, la direction de polarisation, la phase dudit signal, la dispersion, la réflectivité ou identique.

8.   Un véhicule pour cultiver le sol selon une quelconque des revendications précédentes,
**caractérisé en ce que**
ledit détecteur (24) et/ou ledit réflecteur (5) comprennent des éléments qui modifient ou détectent au moins une propriété physique dudit signal réfléchi par ledit réflecteur.

9.   Un véhicule pour cultiver le sol selon une quelconque des revendications précédentes,
**caractérisé en ce que**
les éléments pour modifier au moins une des propriétés physiques de ladite lumière réfléchie sont choisis d'un groupe incluant les grillages de réflexion, les filtres de polarisation, les matériaux électro-optiques ou identique.

10.  Un véhicule pour cultiver le sol selon une quelconque des revendications précédentes,
**caractérisé en ce que**
ledit réflecteur (5) est sélectionné d'un groupe d'appareillages comprenant les miroirs, en particulier les miroirs sphériques, les miroirs planaires, ou autres objets réfléchissants comme par exemple des gouttières, des lampes de jardin, des cordes à linge ou des objets correspondant attachés au moins temporairement à une position fixée.

11.  Un véhicule pour cultiver le sol selon une quelconque des revendications précédentes,
**caractérisé en ce que**
ledit véhicule inclut des appareillages de sécurité d'un groupe d'appareillage comprenant la protection contre saisie par le bas, des capteurs d'inclinaison, des capteurs de contact, la détermination du couple, par exemple pour un appareil pour cultiver, la protection contre les surtensions, la protection contre les surcharges, les capteurs d'humidité, etc.

12.  Un véhicule pour cultiver le sol selon une quelconque des revendications précédentes,
**caractérisé en ce que**
un appareillage de microprocesseurs supplémentaire est prévu qui n'est pas disposé audit véhicule et qui contribuent à la commande dudit véhicule (2).

13.  Un véhicule pour cultiver le sol selon une quelconque des revendications précédentes,
**caractérisé en ce que**
ledit véhicule (2) comprend au moins un capteur sélectionné d'un groupe de capteurs incluant les capteurs de température, les capteurs de chargement de batterie, les capteurs d'humidité, les capteurs d'inclinaison, les capteurs de distance, les capteurs ultrason, les capteurs de changement de champs, les capteurs de vent, les capteurs de couple, etc.

14.  Un véhicule pour cultiver le sol selon une quelconque des revendications précédentes,
**caractérisé en ce que**
un dispositif pour couper de l'herbe, pour semer des graines et/ou pour fertiliser et/ou pour arroser et/ou pour nettoyer est prévu.

15.  Un véhicule pour cultiver le sol selon la revendication 14,
**caractérisé en ce que**
l'espacement dudit dispositif pour couper de l'herbe audit sol à cultiver est variable.

16.  Un véhicule pour cultiver le sol selon la revendication 15,
**caractérisé en ce que**
l'espacement dudit dispositif pour couper audit sol à être cultiver est commander par l'appareillage de microprocesseur disposé dans ledit véhicule.

**17.** Un véhicule pour cultiver le sol selon une quelconque des revendications précédentes,
**caractérisé en ce que**
un autre émetteur et un autre détecteur sont prévus qui conviennent pour capter des irrégularités dans le sol à cultiver.

**18.** Un véhicule pour cultiver le sol selon une quelconque des revendications précédentes,
**caractérisé en ce que**
ledit véhicule est muni d'une pluralité de, particulièrement de quatre roues.

**19.** Un véhicule pour cultiver le sol selon une quelconque des revendications précédentes,
**caractérisé en ce que**
au moins deux desdites quatre roues (13a,13b) sont interconnectées de manière non pivotable.

**20.** Un véhicule pour cultiver le sol selon une quelconque des revendications précédentes,
**caractérisé en ce que**
le changement de direction dudit signal est produit au moyen d'un réflecteur (5) en particulier un miroir (25) monté de manière pivotable autour d'un axe.

**21.** Un véhicule pour cultiver le sol selon une quelconque des revendications précédentes,
**caractérisé en ce que**
la surface plane couverte par ledit réflecteur (5) est disposée à un angle prédéterminé par rapport à la surface plane couverte en substance par les axes des roues dudit véhicule.

**22.** Un véhicule pour cultiver le sol selon une quelconque des revendications précédentes,
**caractérisé en ce que**
ledit réflecteur (5) est monté de manière pivotable autour d'un axe qui est en substance perpendiculaire à la surface plane couverte en substance par lesdits axes des roues du véhicule.

**23.** Un véhicule pour cultiver le sol selon une quelconque des revendications précédentes,
**caractérisé en ce que**
un dispositif optique est prévu dans ledit émetteur (3,21) qui diffuse et/ou diffracte et/ou réfléchi ledit signal détectable physiquement dans un angle prédéterminé.

**24.** Un véhicule pour cultiver le sol selon une quelconque des revendications précédentes,
**caractérisé en ce que**
la dispersion ou la diffraction du signal détectable physiquement se fait en substance dans deux directions de propagation.

**25.** Un véhicule pour cultiver le sol selon une quelconque des revendications précédentes,
**caractérisé en ce que**
la dispersion ou la diffraction du signal détectable physiquement se fait dans une gamme d'angle entre 0 et 180°, de préférence entre 20 et 160°, en particulier préféré entre 45 et 135°.

**26.** Un véhicule pour cultiver le sol selon une quelconque des revendications précédentes,
**caractérisé en ce que**
le changement dans ledit signal par le réflecteur (5) se fait en substance passivement.

**27.** Un véhicule pour cultiver le sol selon une quelconque des revendications précédentes,
**caractérisé en ce que**
ledit véhicule (2) comprend un dispositif pour transmettre et recevoir des données.

**28.** Un véhicule pour cultiver le sol selon une quelconque des revendications précédentes,
**caractérisé en ce que**
un appareillage de microprocesseurs supplémentaires est prévu pour commander ledit véhicule pour cultiver le sol, disposé en dehors du véhicule (2), qui est commandé par un programme et qui présente un dispositif pour transmettre les données entre ledit véhicule et ledit appareillage de microprocesseurs.

**29.** Procédé pour commander un véhicule pour cultiver le sol selon une quelconque des revendications précédentes avec les étapes de procédé suivantes :

- détermination des positions (M) d'une pluralité de réflecteurs (5)
- détermination des frontières (7) de l'aire de surface (1) à cultiver comme détermination d'obstacles (4)
- détermination d'un chemin (74a, 74b, 74c) pour le déplacement du véhicule (2)
- culture du sol

**30.** Procédé pour commander un véhicule pour cultiver le sol selon la revendication 29
**caractérisé en ce que**
l'étape de procédé pour déterminer les positions (M) desdits réflecteurs comprend les étapes de procédé suivantes :

- détermination d'au moins un système de coordonnées à deux axes (X,Y) avec un point de départ prédéterminé (70) ;
- détermination d'une position du véhicule (P1) dans ledit système de coordonnées ;
- émission de signaux physiquement dirigés dudit véhicule (2) et détection desdits signaux réfléchis par ledit réflecteur (5) sur ledit véhicule ;
- détermination des positions angulaires (a1) desdits réflecteurs (5) relativement audit véhicule ;
- détermination du changement de position (P2) du véhicule à un point prédéterminé supplémentaire ;
- détermination de la position angulaire correspondante (a2) desdits réflecteurs ; détermination de la position dudit réflecteur relativement au véhicule.

**31.** Procédé pour commander un véhicule pour cultiver le sol selon l'une des revendications 29 à 30
**caractérisé en ce que**
la détection desdites frontières de secteur de cultivation et des obstacles comprend les étapes de procédé suivantes :

- déplacement dudit véhicule le long des frontières de sol (7) et desdits obstacles (4)
- établissement d'une position de véhicule (P)
- mémorisation des positions individuelles du véhicule dans ladite mémoire dudit appareillage de microprocesseurs.

**32.** Procédé pour commander un véhicule pour cultiver le sol selon l'une des revendications 29 à 31
**caractérisé en ce que**
la positon du véhicule est établie comme suit :

- détermination d'une position de véhicule approximée (P) à l'aide d'au moins deux de préférence trois, particulièrement préféré une pluralité de signaux détectables physiquement ;
- détermination d'une position exacte (P) du véhicule en particulier à l'aide d'un quatrième signal.

**33.** Procédé pour commander un véhicule pour cultiver le sol selon l'une des revendications 29 à 32
**caractérisé en ce que**
la détermination d'un chemin de déplacement comprend les étapes de procédé suivantes :

- détermination des frontières de culture (7) desdites données de position dudit véhicule ;
- correction desdites lignes de frontières établies et
- ajout de surface de culture supplémentaires (1) ou d'obstacles.

Fig. 1

Fig. 4

Fig. 2

Fig. 3

Fig. 5a

Fig. 5b

Fig. 5c

Fig. 5d

173

172

171

170

Fig. 6a

Fig. 6b

Fig. 6c

## Fig.7a

```
                    ( Start )
                       │
           ┌───────────┴─────────────────────────────────────┐
           │     ┌─────────────────┐                          │
           │     │  Eingabebefehl  │ ◄──────── 61             │
           │     └─────────────────┘                          │
           │            │                                     │
      J    │      ◇ Ende ?  N                                 │
      ◄────┴──────◇       ◇──────┐   62                       │
      │           ◇       ◇      │                            │
 ( Ende )              N  │   ◇ Laden ? ◇  N    ── 63          │
              64      J   ▼   ◇         ◇──────────┐          │
               │  ┌───────┐                ◇ Drehen ◇ J  65    │
               └─►│ Laden │◄─────┐      N  ◇        ◇──┐       │
                  └───────┘      │     ◄───◇        ◇  │       │
       J              │        N │                    ▼       │
       ◄─────◇ Fertig ◇─────────┘         ┌──────────────────┐│
             ◇        ◇                    │  Drehbewegung    ││
                                           └──────────────────┘│
                    │                              70          │
                    ▼                                          │
           ┌──────────────────┐                                │
           │   Geradeaus   ◄──┼─ 66                            │
           └──────────────────┘                                │
                    │                                          │
           ┌──────────────────┐                                │
           │ Rechne (x, y, a) ◄─ 67                            │
           └──────────────────┘                                │
                    │                                          │
           ┌──────────────────┐                                │
           │ Rechne Δd, Δa  ◄──┼─ 68                           │
           └──────────────────┘                                │
                    │                                          │
       N     ◇ Δd<Δgd ◇  J                                     │
       ◄─────◇        ◇──────────────────────────────────────┘
             ◇        ◇  69
         J      │  N
       ◄──◇ Δa<Δga ◇
          ◇        ◇
                │
        ┌──────────────────┐
        │  Drehbewegung  ◄─┼─ 70
        └──────────────────┘
```

Fig. 7b

```
        ┌──────────────────┐
        │  Drehbewegung    )──────────────  71
        └────────┬─────────┘
                 │
                 ▼
        ┌──────────────────┐
        │     Drehung      │◄─────────────  72
        └────────┬─────────┘
                 │
                 ▼
        ┌──────────────────┐
        │ Berechnung (x, y, a) │◄───────────  73
        └────────┬─────────┘
                 │
                 ▼
        ┌──────────────────┐
        │  Berechnung Δa   │◄──────────────  74
        └────────┬─────────┘
                 │
         J       ▼       N
        ◄───◇ Δa<Δga ◇───►──────────────  75
         │
         ▼
    ┌──────────┐
    │  Return  │
    └──────────┘
```